# EUROPEAN PATENT SPECIFICATION

(11) **EP 0 758 057 B1**
(45) Date of publication and mention of the grant of the patent: **08.01.2003**
(21) Application number: 96112052.4
(22) Date of filing: 25.07.1996
(51) Int. Cl.: F16B 4/00, F16B 37/04, B21J 15/04

(54) **Adhesive bonded nutplate assembly with integral liner sleeve**
Durch Klebemittel befestigte Mutternplatte mit integrierter Hülse
Plaque portant un écran montée par adhésif integrée avec douille

(30) Priority: 28.07.1995 US 1648
(43) Date of publication of application: 12.02.1997
(73) Proprietor: Physical Systems, Inc., Carson City, Nevada 89706 (US)
(72) Inventor: Hutter, Charles G., III, Carson City, Nevada 89706 (US); Brown, Kenneth M., Carson City, Nevada 89701 (US)
(74) Representative: Ruschke, Hans Edvard, Dipl.-Ing.

(56) References cited:
- DE-C- 4 102 491
- US-A- 3 646 982
- US-A- 3 835 688

## Description

### BACKGROUND OF THE INVENTION

This invention relates generally to improvements in adhesive bonded nutplate assemblies for mounting a nut element or the like on one side of a substrate in general alignment with a substrate opening. More particularly, this invention relates to an improved nutplate assembly of the general type described in U.S. Patent 5,013,391, but wherein the nutplate assembly additionally includes a liner sleeve for protecting the edges of the substrate opening against damage. The improved nutplate assembly is especially suited for adhesive mounting onto composite material substrates.

In many manufacturing environments, it is necessary or desirable to install components onto the blind side of a supporting substrate. As one common example, nutplates are well-known in the automotive and aerospace industries for use in mounting a threaded nut onto the blind side of a supporting substrate, typically in alignment with an access opening formed in the substrate, to accommodate subsequent reception of a threaded screw or bolt. Such nutplates include a floating or fixed nut element carried by a base which is fastened to the substrate normally by one or more rivets extending through rivet ports formed adjacent the access opening. Alternatively, adhesive mounting techniques have been proposed for adhesively bonding the nutplate based onto the substrate, thereby avoiding the need to form additional rivet ports. For optimum bond strength, such adhesive mounting techniques require the nutplate to be pressed against the substrate with a positive force during curing of the adhesive material. U.S. Patent 5,013,391, which is incorporated by reference herein, discloses an adhesive mounted nutplate assembly and related mounting fixture for quickly and easily installing the nutplate assembly onto the substrate blind side, and for thereafter removing the fixture from the front side of the substrate.

In some applications, the nutplate assembly is desirably installed onto a substrate made from a composite material, such as graphite/epoxy resin. In such composite material substrates, it is necessary or desirable to safeguard against wear or other damage to the edges of the opening formed in the substrate. One prior approach to resolve this problem has been to install a thin-walled stainless steel liner sleeve into the substrate opening, prior to installation of the nut plate assembly. Such liner sleeve has typically been anchored in place by the use of rivets extending through a radial flange or the liner sleeve and through rivet ports formed adjacent the substrate opening. The requirement for additional rivet ports or openings in the composite substrate is not desirable, especially in applications wherein these ports and openings must be sealed. Moreover, when a rivet-installed liner sleeve is used, the nutplate assembly must be mounted in turn onto the liner sleeve flange, whereby the nutplate assembly does not seat firmly or securely upon the blind side of the substrate.

The present invention is directed to an improved nutplate assembly which incorporates a liner sleeve adapted to fit through and protect the opening in a substrate, in a manner compatible with the structure and method disclosed in U.S. Patent 5,013,391. Accordingly, the present invention provides a structure and method for installing a protective liner sleeve without requiring separate riveted connection, and in a manner which permits the nutplate assembly to be adhesively mounted securely and firmly to the substrate.

### SUMMARY OF THE INVENTION

In accordance with the invention, which is as defined in claim 1 and 10. In effect it gives rise to an improved adhesive bonded nutplate assembly and related fixturing method for mounting the nutplate assembly onto the blind side of a substrate, wherein the nutplate assembly includes a liner sleeve for protecting the edges of a substrate opening against damage.

The nutplate assembly may comprise a floating nut element retained within a housing or dome having an outer rim for adhesive mounting onto the blind side of the substrate. The liner sleeve protrudes coaxially from the nut element and retainer housing, with a radially enlarged flange secured to the retainer housing as by a press-fit connection. A fixture pin of stainless steel or the like has a contoured head at a trailing end thereof frictionally retained within the bore of the liner sleeve, and a narrow mandrel protruding through the liner sleeve beyond the forward or leading end thereof.

The nutplate assembly may be installed onto the blind side of the substrate, with the liner sleeve fitting through the substrate opening with relatively close tolerance. The outer rim of the retainer housing and the flange on the liner sleeve are adhesively bonded onto the blind side of the substrate, by use of a suitable adhesive bonding material. An installation tool is provided to pull and remove the fixture pin from the front side of the substrate, and concurrently to deform or flare the leading end of the liner sleeve for mechanical interlock connection to the substrate. A preferred installation tool includes a set of mandrel jaws to grasp and pull the fixture pin, in combination with a tool nose of generally conical shape for flaring the leading end of the liner sleeve to fit, for example within a matingly shaped countersink formed on the front side of the substrate.

The deformed liner sleeve is thus tightly and securely locked to the substrate, to hold the retainer housing with the floating nut element therein on the blind side of the substrate in alignment with the substrate opening. The fixture pin may be separated from the nutplate assembly prior to curing of the bonding material, in which case the deformation of the liner sleeve functions to lock the sleeve flange and retainer housing rim tightly against the substrate during the cure period. Alternatively, the liner sleeve may be sized to frictionally engage the edges of the substrate opening during the cure period, in which case the fixture pin can be removed after the adhesive material cures.

Other advantages of the present invention will become more apparent from the following detailed description, taken in conjunction with the accompanying drawings which illustrate, by way of example, the principles of the invention.

### BRIEF DESCRIPTION OF THE DRAWINGS

The accompanying drawings illustrate the invention. In such drawings:
FIGURE 1 is an exploded and somewhat schematic perspective view illustrating an improved adhesive bonded nutplate assembly and related liner sleeve embodying the novel features of the invention;
FIGURE 2 is a perspective view illustrating the application of adhesive material to the nutplate assembly;
FIGURE 3 is a fragmented perspective view illustrating initial placement of the nutplate assembly onto the blind side of a selected substrate;
FIGURE 4 is a fragmented vertical sectional view depicting initial engagement of an installation tool with a fixture pin projecting from the nutplate assembly;
FIGURE 5 is an enlarged fragmented vertical sectional view similar to a portion of FIG. 4, and depicting operation of the installation tool to pull the fixture pin and deform a leading end of the liner sleeve;
FIGURE 6 is an exploded perspective view showing separation of the installation tool and fixture pin from the installed nutplate assembly;
FIGURES 7 and 8 are fragmented vertical sectional views similar to FIG. 5, and illustrating an alternative preferred form of the invention;
FIGURES 9 and 10 are fragmented vertical sectional views similar to FIG. 5, and depicting a further alternative preferred form of the invention; and
FIGURE 11 is a fragmented vertical sectional view illustrating another alternative mounting arrangement for the nutplate assembly with integral liner sleeve.

### DETAILED DESCRIPTION OF THE PREFERRED EMBODIMENTS

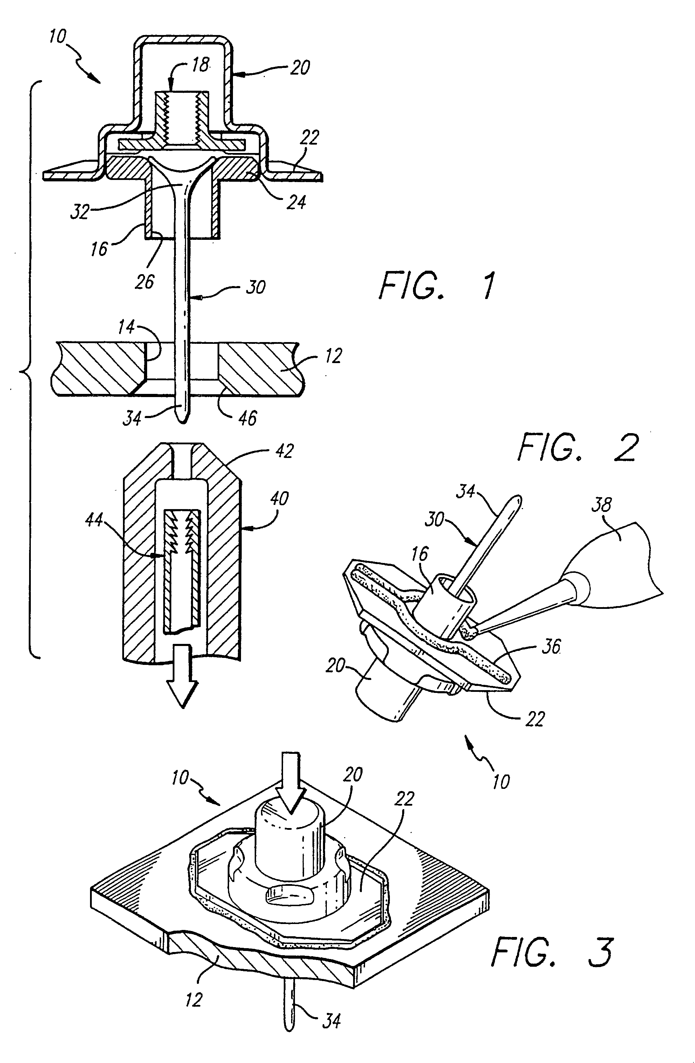

The new nutplate assembly is referred to generally in FIGURES 1-6 by the reference numeral 10 and is adapted for mounting by adhesive bonding onto a substrate 12 having an opening 14 formed therein. The nutplate assembly 10 includes a liner sleeve 16 is an integral part thereof, wherein the liner sleeve 16 functions upon installation to line and protect the substrate opening 14 against damage. When installed, a forward or leading end of the liner sleeve 16 is adapted for mechanical deformation as by flaring to achieve a secure mechanical interlock with the substrate 12. The nutplate assembly 10 with integral liner sleeve 16 is particularly suited for mounting onto the blind side of a composite material substrate, with the liner sleeve 16 safeguarding the edges of the substrate opening 14 against damage.

FIGURE 1 shows the nutplate assembly 10 to include a floating nut element 18 captured or retained against substantial rotation within a retainer housing or dome 20 having a radially outwardly extending rim 22 for adhesive mounting onto the blind side of the substrate 12. A leading or forward end of the retainer housing 20, circumscribed by the rim 22, is open to permit reception as by press-fitting of a radially outwardly extending flange 24 on the trailing end of the liner sleeve 16. The sleeve flange 24 thus cooperates with the retainer housing 20 to receive and retain the floating nut element 18, with a sleeve bore 26 being generally coaxially aligned with a threaded bore 28 of the nut element 18. Alternately, the sleeve flange 24 can be secured to the open end of the retainer housing 20 by other means, such as by an adhesive connection.

The liner sleeve 16 protrudes forwardly from the flange 24. In this regard, in the preferred form, the forwardmost surfaces of the sleeve flange 24 and the housing rim 22 lie in a common plane. A fixture pin 30 of stainless steel or the like has an enlarged contoured head 32 at the trailing end thereof, wherein the pin head 32 is frictionally retained within the bore 26 of the liner sleeve 16. A narrow mandrel 34 projects with clearance from the pin head 32 and through the liner sleeve 16, terminating at a location spaced forwardly of the leading end of the liner sleeve.

As shown in FIG. 2, a selected adhesive material 36 is applied from an applicator 38 onto the coplanar surfaces of the liner sleeve flange 24 and the housing rim 22. The adhesive material 36 thus surrounds the liner sleeve 16 which protrudes outwardly from the adhesive bead. The nutplate assembly 10, with adhesive material thereon, is then pressed firmly against the blind side of the substrate 12 (FIG. 3), with the liner sleeve 16 and fixture pin mandrel 34 fitting through the substrate opening 14.

An installation tool 40 as shown in FIGS. 1 and 4-6 is provided for securely mounting the nutplate assembly in a tightly clamped, mechanically interlocked relation with the substrate 12. The installation tool 40 comprises a pull-type blind rivet installation tool having a modified nose piece 42 to deform or flare a leading end of the liner sleeve 16. At the same time, the installation tool utilizes pulling jaws 44 to grasp and separate the fixture pin 30 from the nutplate assembly. In the preferred form, the nose piece 42 has a truncated conical shape as shown, for deforming the leading end of the liner sleeve with a flare for seated mating fit within a countersink 46 formed in the front side of the substrate 12. One preferred installation tool 40 comprises Model G750 available from Cherry Aerospace Fastening Systems, division of Textron, Inc., of Santa Ana, California.

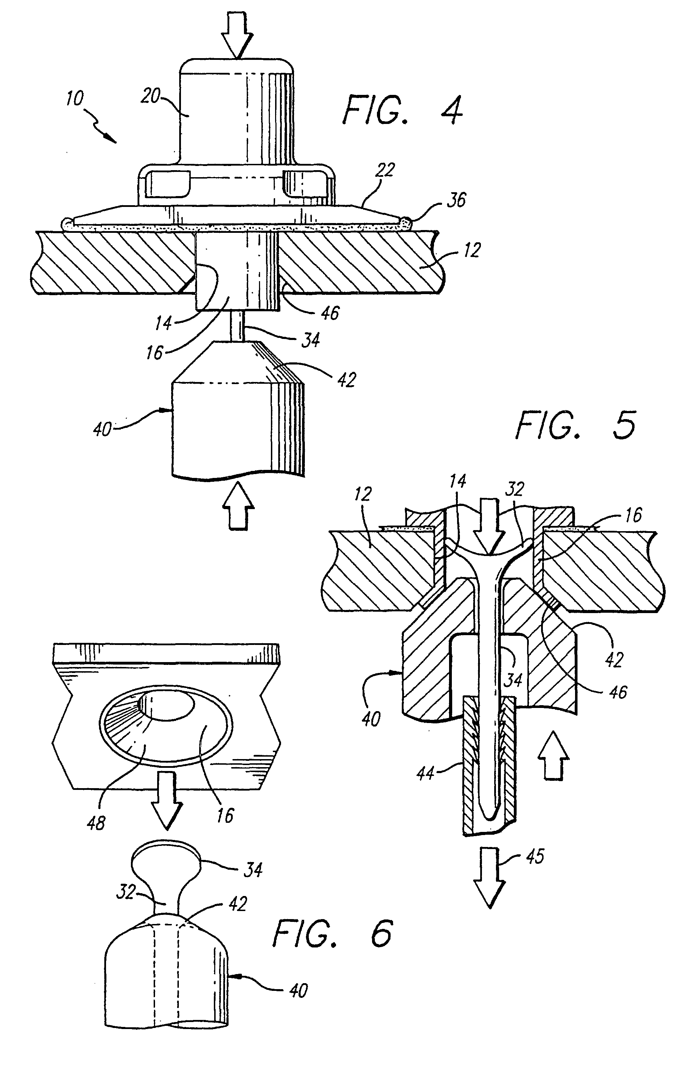

FIGURE 4 illustrates initial engagement of the installation tool 40 with the mandrel 34 of the fixture pin 30. Further engagement is depicted in FIG. 5, which shows retraction of the pulling jaws 44 in the direction of arrows 45 accompanied by relative advancement of the nose piece 42 for substantially simultaneous deformation and flaring of the liner sleeve leading end as the fixture pin is separated from the nutplate assembly. FIGURE 6 shows removal of the fixture pin 30 with the installation tool 40, leaving the flared leading end 48 of the liner sleeve seated within the countersink 46.

In use, when installed as described, the liner sleeve 16 forms a convenient structure to keep the adhesive material from squeezing into the interior of the substrate opening 14. Moreover, friction between the liner sleeve and the edges of the opening 14 can assist in retaining the nutplate assembly in position while the adhesive material cures, if it is desired to defer the flaring operation to a later time. Normally, however, it is desirable to perform the flaring operation immediately after application of the adhesive material, so that the flared leading end 48 securely locks the nutplate assembly in place during the adhesive cure time.

The countersink 46 on the front side of the substrate 12 conveniently permits liner sleeve flaring with a final flush mounting. However, alternate nose piece configurations can be provided on the installation tool 40 to achieve alternative deformation geometries for the leading end 48 of the liner sleeve. In this regard, FIGURE 11 shows the sleeve leading end 48 as a rolled or flat flare in the absence of a substrate countersink, in applications wherein a flush mounting is not required. Such applications may include, for example, the case where an elastomeric gasket 50 is interposed between the front side of the substrate 12 and a bolt or other fastener (not shown) to be secured to the nut element. This latter configuration saves the cost of providing countersinks in the substrate, and can permit the use of substrates which otherwise would not be thick enough to form a countersink therein.

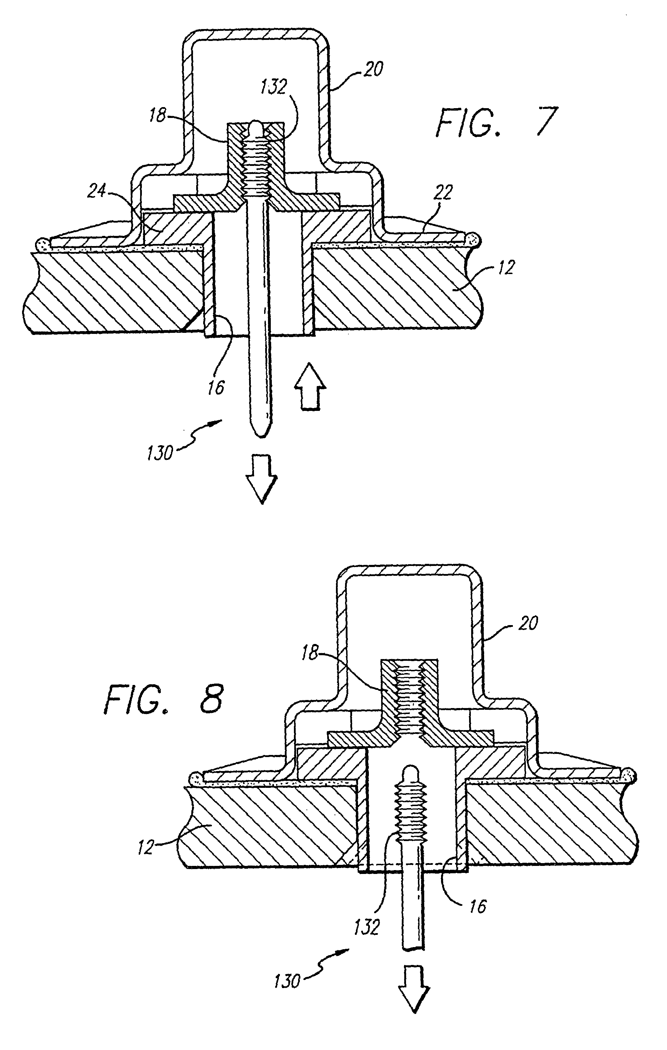

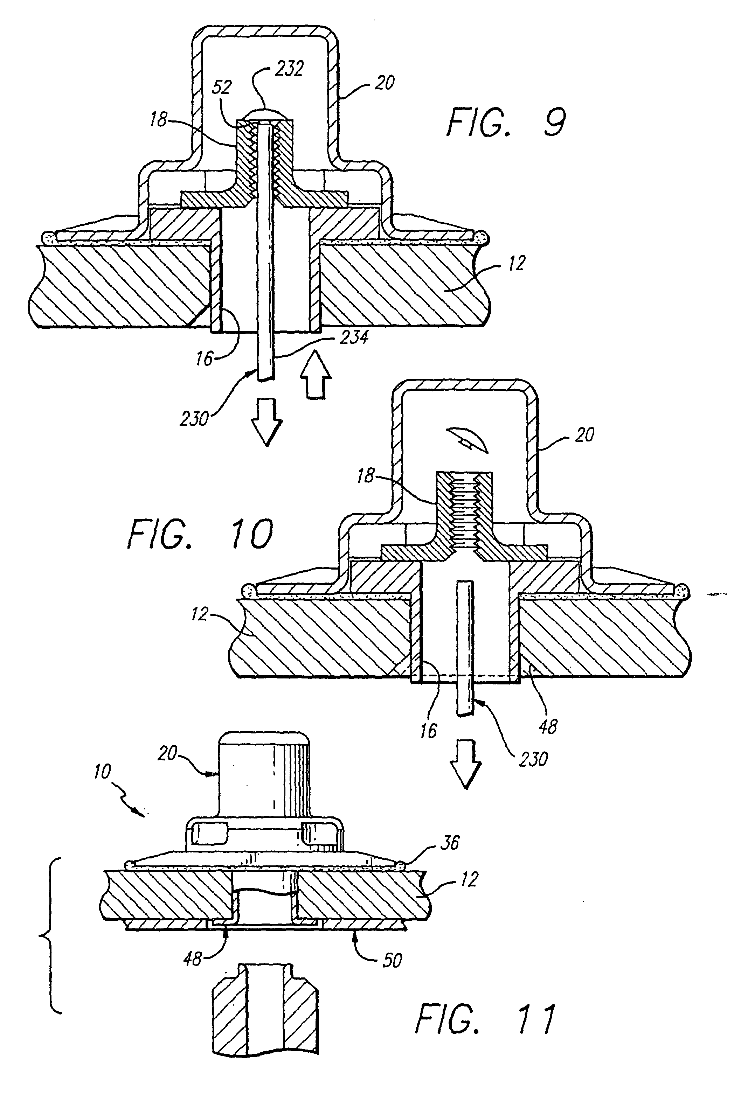

FIGURES 7 and 8 shown an alternative embodiment of the invention, modified with respect to the manner in which the fixture pin is initially connected to the nutplate assembly. In this embodiment, a modified fixture pin 130 has a threaded trailing end 132 for threaded engagement with the nut element 18. The fixture pin 130 is subsequently separated from the nutplate assembly as viewed in FIG. 8 by rotatably unthreading from the nut element, as the leading end 48 of the liner sleeve is flared or otherwise deformed.

FIGURES 9 and 10 show another alternative fixture pin configuration wherein a modified fixture pin 230 has an enlarged head 232 at the trailing end thereof. In this embodiment, the pin head 232 is structurally connected to the pin mandrel 234 via a break-away connection defined by a shallow groove 52 at the head/mandrel junction. The fixture pin mandrel 234 is separated from the nutplate assembly by applying a sufficient pulling force to break the head 232 therefrom, as viewed in FIG. 10. During this pulling step, the leading end 48 of the liner sleeve 16 is mechanically deformed or flared, as previously described.

Other features and advantages of the present invention will become more apparent from the following detailed description, taken in conjunction with the accompanying drawings which illustrate, by way of example, the principles of the invention. Accordingly, no limitations on the invention is intended by way of the foregoing description and accompanying drawings, except as set forth in the appended claims.

## Claims

1. An attachment assembly (10) for mounting onto a substrate (12) having a front side and blind side and an opening (14) extending therebetween, said attachment assembly (10) comprising:
an attachment (16,18,20) having an underside surface for engaging the bind side of the substrate (12), said attachment (16,18,20) including a liner sleeve (16);
a fixture pin (30) having a head (32) formed at a trailing end thereof and disposed within said attachment in releasable engagement therewith, and a mandrel (34) protruding from said head (32) and terminating at a leading end disposed beyond a leading end of said liner sleeve (16);
said fixture pin (30) being removable from said attachment by pulling said mandrel (34) from the front side of said substrate (12); and
adhesive means (36) for adhesive mounting of said attachment underside surface to the blind side of the substrate (12);
**characterized in that**
said liner sleeve (16) has a shape and size to protrude forward of said underside surface and through the substrate opening (14) when said attachment underside surface engages the blindside of the substrate (12), said leading end of said liner sleeve (16) being deformable; and
said mandrel (34) projects with a clearance through said liner sleeve (16) such that the mandrel can be gripped and pulled by a pulling tool, the reaction force of which serving to flare said deformable sleeve leading end into locking relation with said substrate (12) to mechanically lock said attachment underside surface tightly against the blindside of the substrate.

2. The attachment assembly (10) of claim 1 wherein said attachment comprises a retainer housing (20) having a nut element (18) therein, said retainer housing (20) having said underside surface formed thereon.

3. The attachment assembly (10) of claim 2 wherein said liner sleeve (16) has an outwardly radiating flange (24) formed at a trailing end thereof, said liner sleeve (16) being assembled with said retainer housing (20) and cooperating with a rim (22) formed on said retainer housing (20) to define said underside surface.

4. The attachment assembly (10) of claim 1 wherein said fixture pin head (32) is frictionally engaged with said liner sleeve (16).

5. The attachment assembly (10) of claim 1 wherein said fixture pin head (132) is threadably engaged with said attachment.

6. The attachment assembly (10) of claim 1 wherein said fixture pin head (232) is connected to said mandrel (234) by a region (52) of reduced cross sectional size adapted to cause said fixture pin (230) to break between said head (232) and mandrel (234) when said mandrel (234) is pulled from the front side of the substrate (12) to separate said fixture pin (230) from the liner sleeve (16).

7. The attachment assembly (10) of claim 1 further including an installation tool (40) for engaging and pulling said mandrel (34) from the front side of the substrate (12) to separate said fixture pin (30) from the liner sleeve (16), said installation tool (40) further including means (44) for engaging and flaring said liner sleeve leading end substantially concurrently with said pulling of said mandrel (34).

8. The attachment assembly (10) of claim 1 wherein said attachment comprises a nutplate assembly (18,20) having an open-ended retainer housing (20) defining a radially outwardly extending rim (22) with an underside surface thereon, a nut element (18) received within said retainer housing (20), and said liner sleeve (16) having a radially outwardly projecting flange (24) formed at a trailing end thereof, said liner sleeve flange (24) having an underside surface thereon, said liner sleeve flange (24) being assembled with said retainer housing (20) to orient the underside surfaces of said liner sleeve flange (24) and said housing rim (22) in substantially coplanar relation to engage the blind side of the substrate (12) with said liner sleeve (16) projecting through and at least slightly beyond the front side of the substrate (12);
said fixture pin head (32) releasibly engaging at least one of said liner sleeve (16) and said nut element (18), said mandrel (34) projecting from said head (32) and through said liner sleeve (16);
said fixture pin (30) being removable from said liner sleeve (16) by pulling said mandrel (34) from the front side of the substrate (12), and said leading end of said liner sleeve (16) being deformable to flare said liner sleeve leading end into locked relation with said substrate (12).

9. The attachment assembly (10) of Claim 8 wherein said mandrel leading end is disposed at least slightly forward of said liner sleeve leading end.

10. A method of mounting an attachment assembly (10) onto a substrate (12) having a front side and blind side and an opening (14) extending therebetween, said attachment assembly (10) comprising:
an attachment (16, 18, 20) having an underside surface and a liner sleeve (16) having a size and shape to be able to protrude through he substrate opening (14); and
a fixture pin (30) having a head (32) formed at a trailing end thereof and disposed within said attachment in releasable engagement therewith, and a mandrel (34) protruding from said head (32) and terminating at a leading end disposed beyond a leading end of said liner sleeve (16);
said fixture pin (30) being removable from said attachment by pulling said mandrel (34) from the front side of said substrate (12), and said leading end of said liner sleeve (16) being deformable to flare said liner sleeve leading end into locked relation with said substrate (12) to mechanically lock said attachment underside surface tightly against the blind side of the substrate (12);
wherein the method includes
placing the underside surface of the attachment in engagement with the blind side of the substrate so that the liner sleeve (16) protrudes through the substrate opening, gripping the fixture pin (30); and
pulling the fixture pin (30) with respect to the liner sleeve (16) thereby deforming the liner sleeve into a locked relationship with the substrate (12).

## Patentansprüche

1. Befestigungsanordnung (10) zum Ansetzen an ein Substrat (12) mit einer Vorder- und einer Blindseite und einer zwischen diesen sich erstreckenden Öffnung (14), mit:
einem Aufsatz (16, 18, 20) mit einer Unterseite zur Anlage auf der Blindseite des Substrats (12) sowie mit einer Auskleidungsbuchse (16);
einem Setzstift (30) mit einem an einem rückseitigen Ende ausgebildeten Kopf (32), der sich im Aufsatz in lösbarem Eingriff mit diesem befindet, und einem vom Kopf (32) abstehenden Dorn (34), der zu einem vorderen Ende ausläuft, das über ein vorderes Ende der Auskleidungsbuchse (16) hinaus vorsteht;
wobei der Setzstift (30) aus dem Aufsatz herausnehmbar ist, indem man von der Vorderseite des Substrats (12) her Zug auf den Dorn (34) ausübt; und
einem Klebstoff (36), mit dem die Unterseite des Aufsatzes mit der Blindseite des Substrats (12) verklebbar ist;
**dadurch gekennzeichnet, dass**
die Auskleidungsbuchse (16) so groß und so gestaltet ist, dass sie, wenn die Unterseite des Aufsatzes auf der Blindseite des Substrats (12) aufliegt, von der Unterseite und durch die Substratöffnung (14) vorsteht, wobei das vordere Ende der Auskleidungsbuchse (16) verformbar ist; und dass
der Dorn (34) mit Spiel durch die Auskleidungsbuchse (16) vorsteht derart, dass er sich mit einem Setzwerkzeug ergreifen und ziehen lässt, wobei die dabei entstehende Reaktionskraft das vordere Ende der verformbaren Buchse auf das Substrat (12) aufdrückt und sie mit ihm versperrt und so die Unterseite des Ansatzes fest mit der Blindseite des Substrats versperrt.

2. Befestigungsanordnung (10) nach Anspruch 1, deren Aufsatz ein Auffanggehäuse (20) aufweist, in dem sich ein Mutternelement (18) befindet und an dem die Unterseite ausgebildet ist.

3. Befestigungsanordnung (10) nach Anspruch 2, bei der an ein hinteres Ende der Auskleidungsbuchse (16) ein radial auswärts vorstehender Flansch (24) angeformt ist, wobei die Auskleidungsbuchse (16) mit dem Auffanggehäuse (20) zusammengesetzt ist und mit einem Rand (22) am Auffanggehäuse (20) zusammenwirkend die Unterseite bildet.

4. Befestigungsanordnung (10) nach Anspruch 1, deren Setzstift mit seinem Kopf (32) reibschlüssig an der Auskleidungsbuchse (16) angreift.

5. Befestigungsanordnung (10) nach Anspruch 1, deren Setzstift mit seinem Kopf (132) mit dem Aufsatz verschraubt ist.

6. Befestigungsanordnung (10) nach Anspruch 1, deren Setzstift mit seinem Kopf (232) mit dem Dorn (234) über einen Bereich (52) verringerten Querschnitts verbunden ist, in dem der Setzstift (230) zwischen dem Kopf (232) und dem Dorn (234) zerreißen kann, wenn von der Vorderseite des Substrats (12) her Zug auf den Dorn (234) ausgeübt wird, um den Setzstift (230) von der Auskleidungsbuchse (16) zu trennen.

7. Befestigungsanordnung (10) nach Anspruch 1, weiterhin mit einem Setzwerkzeug (40), das von der Vorderseite des Substrats (12) her an den Dorn (34) ansetzbar ist, um Zug auf ihn auszuüben und so den Setzstift (30) von der Auskleidungsbuchse (16) zu trennen, wobei das Setzwerkzeug (40) weiterhin eine Einrichtung (44) aufweist, die beim Ziehen am Dorn (34) am vorderen Ende der Auskleidungsbuchse angreift und dieses aufweitet.

8. Befestigungsanordnung (10) nach Anspruch 1, deren Aufsatz eine Mutternplattenanordnung (18, 20) mit einem offenendigen Auffanggehäuse (20), das einen radial auswärts vorstehenden Rand (22) mit einer Unterseite hat, und ein Mutternelement (18) in dem Auffanggehäuse (20) aufweist, wobei das hintere Ende der Auskleidungsbuchse (16) zu einem radial auswärts vorstehenden Flansch (24) geformt ist, der eine Unterseite aufweist und mit dem Auffanggehäuse (20) so zusammengesetzt ist, dass die Unterseiten des Flansches (24) an der Auskleidungsbuchse und des Gehäuserandes (22) im Wesentlichen coplanar und auf der Blindseite des Substrats (12) aufliegen, wobei die Auskleidungsbuchse (16) durch das Substrat (12) hindurch und mindestens geringfügig über dessen Vorderseite hinaus vorsteht;
wobei der Kopf (32) des Setzstiftes mit mindestens der Auskleidungsbuchse (16) oder dem Mutternelement (18) im Eingriff steht und der Dorn (34) vom Kopf (32) her durch die Auskleidungsbuchse (16) verläuft;
wobei der Setzstift (30) aus der Auskleidungsbuchse (16) entfernbar ist, indem man von der Vorderseite des Substrats (12) her Zug auf den Dorn (34) ausübt, und das vordere Ende der Auskleidungsbuchse (16) verformbar ist, so dass es sich in eine Versperrung mit dem Substrat (12) aufweiten kann.

9. Befestigungsanordnung (10) nach Anspruch 8, bei der das vordere Ende des Dorns mindestens geringfügig vor dem vorderen Ende der Auskleidungsbuchse liegt.

10. Verfahren zum Aufsetzen einer Befestigungsanordnung (10) auf ein Substrat (12) mit einer Vorder- und einer Blindseite und einer zwischen diesen sich erstreckenden Öffnung (14), mit:
einem Aufsatz (16, 18, 20) mit einer Unterseite und einer Auskleidungsbuchse (16), die so groß und gestaltet ist, dass sie durch die Öffnung (14) im Substrat hindurch verläuft; und
einem Setzstift (30) mit einem an dessen hinterem Ende ausgebildeten Kopf (32), der sich im Ansatz in lösbaren Eingriff mit diesem befindet, wobei ein Dorn (34) vom Kopf (32) ab vorsteht und zu einem vorderen Ende ausläuft, dass außerhalb des vorderen Endes der Auskleidungsbuchse (16) liegt;
wobei der Setzstift (30) aus dem Ansatz entfernbar ist, indem man von der Vorderseite des Substrats (12) Zug auf den Dorn (34) ausübt, und das vordere Ende der Auskleidungsbuchse (16) verformbar ist, so dass es sich aufweitet und mit dem Substrat (12) versperrt und so die Unterseite das Aufsatzes fest mit der Blindseite des Substrats (12) versperrt;
mit folgenden Schritten:
Aufsetzen der Unterseite des Aufsatzes auf die Blindseite des Substrats derart, dass die Auskleidungsbuchse (16) sich durch die Öffnung im Substrat erstreckt, Ergreifen des Setzstifts (30); und
Ausüben eines Zugs auf den Setzstift (30) bezüglich der Auskleidungsbuchse (16) und dadurch Verformen der Auskleidungsbuchse zu einer Versperrung mit dem Substrat.

## Revendications

1. Ensemble de fixation (10) destiné à être moulé sur un substrat (12) ayant un côté avant et un côté aveugle et une ouverture (14) s'étendant entre eux, ledit ensemble de fixation (10) comprenant :
une fixation (16, 18, 20) ayant une surface inférieure pour une prise avec le côté aveugle de substrat (12), ladite fixation (16, 18, 20) incluant un manchon de revêtement (16);
une broche de fixation (30) ayant une tête (32) formée sur son extrémité arrière et disposée à l'intérieur de ladite fixation, en prise libre avec celle-ci, et un mandrin (34) prolongeant ladite tête (32) et se terminant par une extrémité avant disposée au-delà d'une extrémité avant dudit manchon de revêtement (16) ;
ladite broche de fixation (30) pouvant être retirée de ladite fixation en tirant ledit mandrin (34) à partir du côté avant dudit substrat (12) ; et
un moyen d'adhésion (36) pour un montage adhésif de ladite surface inférieure de la fixation sur le côté aveugle du substrat (12) ;
**caractérisé en ce que** ledit manchon de revêtement (16) a une forme et une dimension pour dépasser vers l'avant de ladite surface inférieure et traverser l'ouverture du substrat (14) lorsque la surface inférieure de la fixation est en prise avec le côté aveuglé du substrat (12), ladite extrémité avant dudit manchon de revêtement (16) étant déformable ; et
ledit mandrin (34) traverse avec un dégagement ledit manchon de revêtement (16) de sorte que le mandrin peut être saisie et tiré par un outil de tirage, dont la force de réaction sert à élargir ladite extrémité avant du manchon déformable jusqu'à une liaison de blocage avec ledit substrat (12) pour bloquer mécaniquement et de manière serrée ladite surface inférieure de la fixation contre le côté aveugle du substrat.

2. Ensemble de fixation (10) selon la revendication 1, dans lequel ladite fixation comprend un logement de maintien (20) ayant un élément d'écrou (18) dans celui-ci, ledit logement de maintien (20) ayant un élément d'écrou (18) dans celui-ci, ledit logement de maintien (20) ayant ladite surface inférieure formée sur ledit logement de maintien.

3. Ensemble de fixation (10) selon la revendication 2, dans lequel ledit manchon de revêtement (16) comporte une bride orientée radialement vers l'extérieur (24) formée au niveau de son extrémité arrière, ledit manchon de revêtement (16) étant assemblé avec ledit logement de maintien (20) et coopérant avec un rebord (22) formé sur ledit logement de maintien (20) pour définir ladite surface inférieure.

4. Ensemble de fixation (10) selon la revendication 1, dans lequel ladite tête de broche de fixation (32) est mise en prise par frottement avec ledit manchon de revêtement (16).

5. Ensemble de fixation (10) selon la revendication 1, dans lequel ladite tête de broche de fixation (132) est mise en prise par filetage avec ladite fixation.

6. Ensemble de fixation (10) selon la revendication 1, dans lequel ladite tête de broche de fixation (232) est reliée audit mandrin (234) par une région (52) de dimension réduite en section transversale, ajustée pour amener ladite broche de fixation (230) à se rompre entre ladite tête (232) et ledit mandrin (234) lorsque ledit mandrin (234) est tiré à partir du côté avant de substrat (12) pour séparer ladite broche de fixation (230) du manchon de revêtement (16).

7. Ensemble de fixation (10) selon la revendication 1, incluant, en outre, un outil d'installation (40) pour mettre en prise et tirer ledit mandrin (34) à partir du côté avant du substrat (12) pour séparer ladite broche de fixation (30) du manchon de revêtement (16), ledit outil d'installation (40) incluant, en outre, un moyen (44) pour mettre en prise et élargir ladite extrémité avant du manchon de revêtement sensiblement simultanément avec ledit tirage dudit mandrin (34).

8. Ensemble de fixation (10) selon la revendication 1, dans lequel ladite fixation comprend un assemblage de plaque à écrou (18, 20) ayant un logement de maintien à extrémité ouverte (20) définissant un rebord s'étendant radialement vers l'extérieur (22) avec sa surface inférieure sur celui-ci, un élément d'écrou (18) reçu à l'intérieur du logement de maintien (20), ledit manchon de revêtement (16) ayant une bride dépassant radialement vers l'extérieur (24) formée au niveau de son extrémité arrière, ladite bride du manchon de revêtement (24) ayant une surface inférieure sur celle-ci, ladite bride de manchon de revêtement (24) étant assemblée avec ledit logement de maintien (20) pour orienter les surfaces inférieures de ladite bride du manchon de revêtement (24) et dudit rebord de logement (22) en relation sensiblement coplanaire pour mettre en prise le côté du substrat (12) avec ledit manchon de revêtement (16) traversant et dépassant au moins légèrement au-delà du côté avant du substrat (12) ;
ladite tête de broche de fixation (32) mettant en prise libre au moins l'un des deux parmi ledit manchon de revêtement (16) et ledit élément d'écrou (18), ledit mandrin (34) prolongeant ladite tête (32) et traversant ledit manchon de revêtement (16) ;
ladite broche de fixation (30) pouvant être retirée dudit manchon de revêtement (16) en tirant ledit mandrin (34) à partir du côté avant du substrat (12), et ladite extrémité avant dudit manchon de revêtement (16) étant déformable pour élargir l'extrémité avant du manchon de revêtement jusqu'à une liaison de blocage avec ledit substrat (12).

9. Ensemble de fixation (10) selon la revendication 8, dans lequel ladite extrémité avant du mandrin est disposée au moins légèrement à l'avant de l'extrémité avant dudit manchon de revêtement.

10. Procédé de montage d'un semble de fixation (10) sur un substrat (12) ayant un côté avant et un côté aveugle et une ouverture (14) s'étendant en ceux-ci, ledit ensemble de fixation (10) comprenant :
une fixation (16, 18, 20) ayant une surface inférieure et un manchon de revêtement (16) ayant une dimension et une forme propres à traverser l'ouverture de substrat (14) ; et
une broche de fixation (30) ayant une tête (32) formée sur son extrémité arrière est disposée à l'intérieur de ladite fixation en prise libre avec celle-ci, et un mandrin (34) prolongeant ladite tête (32) et se terminant par une extrémité avant disposée au-delà d'une extrémité avant dudit manchon de revêtement (16) ;
ladite broche de fixation (30) pouvant être retirée de ladite fixation en tirant ledit mandrin (34) à partir du côté avant dudit substrat (12), et ladite extrémité avant dudit manchon de revêtement (16) étant déformable pour élargir ladite extrémité avant du manchon de revêtement jusqu'à une liaison de blocage avec ledit substrat (12) pour bloquer mécaniquement et de manière serrée ladite surface inférieure de la fixation contre le côté aveugle du substrat (12),
dans lequel le procédé inclut les étapes consistant à :
placer la surface inférieure de la fixation en prise avec le côté aveugle du substrat de sorte que le manchon de revêtement (16) traverse l'ouverture de substrat, saisir la broche de fixation (30) ; et
tirer la broche de fixation (30) par rapport au manchon de revêtement (16), déformant en conséquence le manchon de revêtement jusqu'à une liaison de blocage avec le substrat (12).
